Europäisches Patentamt

European Patent Office

Office européen des brevets

(11) Veröffentlichungsnummer: **0 467 022 A2**

# EUROPÄISCHE PATENTANMELDUNG

(21) Anmeldenummer: **91106199.2**

(51) Int. Cl.⁵: **H04M 1/72**

(22) Anmeldetag: **18.04.91**

(30) Priorität: **19.07.90 DE 4022929**

(43) Veröffentlichungstag der Anmeldung:
**22.01.92 Patentblatt 92/04**

(84) Benannte Vertragsstaaten:
**AT BE CH DE DK ES FR GB GR IT LI LU NL SE**

(71) Anmelder: **HAGENUK GMBH**
**Westring 431**
**W-2300 Kiel 1(DE)**

(72) Erfinder: **Hammon, Klaus, Dipl.Wirt.Ing.**
**Eiderweg 14 a**
**W-2301 Mielkendorf(DE)**
Erfinder: **Rinschen, Michael, Dipl.-Ing.**
**Spreeallee 264**
**W-2300 Kiel-Russee(DE)**

(74) Vertreter: **Hansmann, Dierk, Dipl.-Ing.**
**Jessenstrasse 4**
**W-2000 Hamburg 50(DE)**

(54) **Vorrichtung zur Ausbildung von Nebenstellanlagen.**

(57) Die Vorrichtung ist als Teil einer Nebenstellenanlage ausgebildet und weist mindestens eine Basisstation eines schnurlosen Telefones, einen Handapparat und eine Ladestation auf. Mehrere Basisstationen werden daher von einem gemeinsamen Netzteil gespeist und über einen eine galvanische Trennung vornehmenden Koppler mit, einer Antennenweiche verbunden. Die Antennenweiche ist an eine über Funkstrecken mit den Handapparaten kommunizierende Antenne angeschlossen. Die Ladestationen sind als von den Basisstationen getrennt anordbare eigenständige Einheiten ausgebildet.

Fig.1

Die Erfindung betrifft eine Vorrichtung zur Ausbildung von Nebenstellenanlagen unter Einsatz von schnurlosen Telefonen, bestehend aus mindestens einer Basisstation einem Handapparat und einer Ladestation.

Grundsätzlich ist eine Erweiterung von Nebenstellenanlagen mit einem erheblichen Aufwand verbunden, da zur Bereitstellung einer zusätzlichen Nebenstelle in der Regel erhebliche Verkabelungsarbeiten erforderlich sind. Darüber hinaus ist der Inhaber eines Nebenstellenanschlusses bei einer Abwesenheit von seinem üblichen Arbeitsplatz nur umständlich und zeitaufwendig zu erreichen. Zur Erweiterung installierter Nebenstellenanlagen ist deshalb vorgeschlagen worden, zusätzlich zur Nebenstellenanlage schnurlose Telefone vorzusehen, deren Basisstationen im Bereich der Nebenstellenanlage angeordnet sind. Der Betrieb mehrerer Basisstationen von schnurlosen Telefonen mit geringem gegenseitigen Abstand weist jedoch den Nachteil auf, daß durch die Antennen sowie den Sende- und Empfangsbetrieb der einzelnen Basisstationen gegenseitige Störungen auftreten, die die Qualität der Signalübertragung beeinträchtigen. Es ist deshalb erforderlich, die Basisstationen mit einem Abstand von mindestens einem Meter zueinander anzuordnen. Darüber hinaus ist für jede Basisstation eine separate Energieversorgung erforderlich. Hieraus resultiert ein zusätzlicher Installationsaufwand.

Aufgabe der vorliegenden Erfindung ist es daher, eine Vorrichtung der gattungsgemäßen Art so zu verbessern, daß mit geringem Aufwand eine vorgebbare Anzahl von Nebenstellen betriebssicher betrieben werden.

Diese Aufgabe wird erfindungsgemäß dadurch gelöst, daß mehrere Basisstationen von einer gemeinsamen Versorgungseinheit gespeist und über einen, eine galvanische Trennung vornehmenden Koppler, mit einer Antennenweiche verbunden sind, die an eine über Funkstrecken mit den Handapparaten kommunizierende Antenne angeschlossen ist und die Ladestationen als von den Basisstationen getrennt angeordnete eigenständige Einheiten ausgebildet sind.

Die Speisung der Basisstationen über eine gemeinsame Versorgungseinheit vermeidet einen wesentlichen Teil des für die Energieversorgung von separaten Basisstationen erforderlichen Installationsaufwandes. Aufgrund der durch den Koppler erfolgenden galvanisch getrennten Verbindung der Basisstationen mit der Antennenweiche ist es möglich, sämtliche angeschlossenen Basisstationen über eine gemeinsame Antenne mit den jeweils zugeordneten Handapparaten kommunizieren zu lassen. Eine gegenseitige Beeinflussung von benachbarten Antennen wird hierdurch vermieden. Darüber hinaus ist es möglich, die Basisstationen mit geringem räumlichen Abstand zueinander anzuordnen bzw. diese zu einem einheitlichen Gerät zusammenzufassen. Die von den Basisstationen getrennte Ausbildung der Ladestationen ermöglicht es, die Ladestationen in einer unmittelbaren Umgebung eines Arbeitsplatzes eines die betreffende Nebenstelle benutzenden Teilnehmers anzuordnen. Die Wiederaufladung bzw. die Auswechselung von im Bereich der Handapparate angeordneten Akkumulatoren kann hierdurch ohne wesentlichen Zeitaufwand erfolgen. Insbesondere ist es nicht erforderlich, daß der jeweilige Teilnehmer einen oft nicht unerheblichen weg zu den jeweils zugeordneten Basisstationen zurücklegt. Der jeweilige Teilnehmer kann seinen Handapparat an beliebige Orte innerhalb einer durch eine Funkstrecke zwischen den Basisstationen und Handapparaten überbrückbaren Entfernung mitnehmen und ist hierdurch kurzfristig und ohne zusätzlichen Aufwand zu erreichen.

Gemäß einer bevorzugten Ausführungsform wird vorgeschlagen, daß die Antennenweiche, die Basisstationen sowie die Basisstationen mit der Nebenstellenanlage verbindende Übertragungseinheiten in einem gemeinsamen Gehäuse angeordnet sind und einen Verteiler ausbilden. Hierdurch wird eine kompakte Ausbildung gewährleistet und der Installationsaufwand vermindert.

Zur Verstärkung der Empfangssignale ist vorgesehen, daß im Bereich der Antennenweiche ein Empfangsverstärker angeordnet ist. Gleichfalls ist es möglich, daß im Bereich der Antennenweiche ein ein Sendesignal entkop pelnder Sendeverstärker angeordnet ist, um ein Sendesignal zu verstärken.

Der Installationsaufwand wird auch dadurch vermindert, daß die Antenne im Bereich des Gehäuses angeordnet ist. Es ist aber zur Gewährleistung einer optimalen Positionierung der Antenne auch möglich, daß die Antenne als separat vom Gehäuse angeordnetes externes Bauteil ausgebildet ist.

Eine Koordinierung des Betriebs der Basisstationen erfolgt dadurch, daß die Basisstationen von einer Endstufenabschaltung beaufschlagt sind.

Eine preiswerte Konstruktion der Ladestationen ist dadurch möglich, daß mindestens eine der Ladestationen ein entsprechend einer Bauform eines Gehäuses einer Basisstation ausgebildetes Gehäuse aufweist.

Zur Verringerung des Energieverbrauches im Bereich der Handapparate ist vorgesehen, daß im Bereich des Handapparates ein ihn aktivierender und deaktivierender Schalter angeordnet ist.

Ein Ausführungsbeispiel der Erfindung ist in den Zeichnungen schematisch dargestellt. Es zeigen:

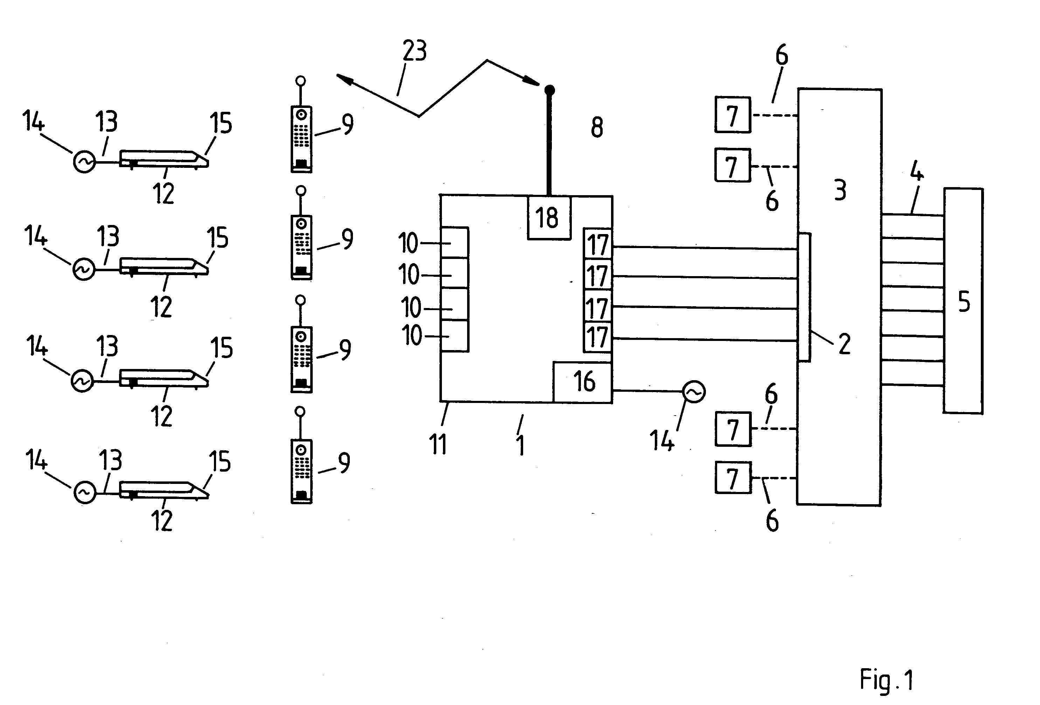

Fig. 1: ein Blockschaltbild einer Nebenstellenanlage mit angeschlossenem Verteiler zur Kommunikation mit Handapparaten von schnurlosen Telefonen **und**

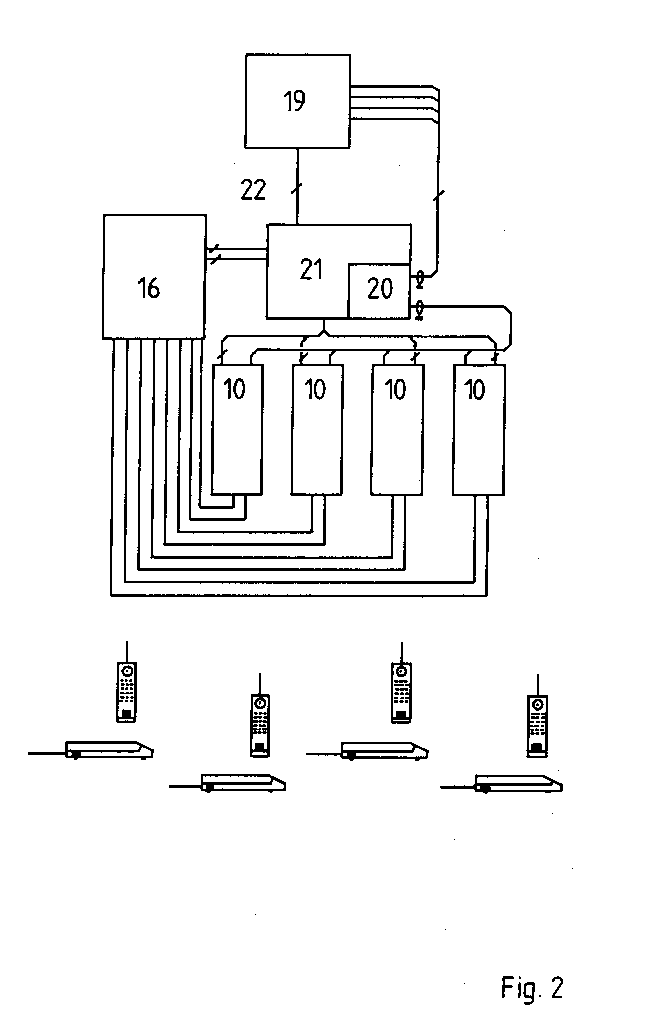

Fig. 2: ein Blockschaltbild des Verteilers sowie eine prinzipielle Darstellung von zugeordneten Handapparaten und Ladestationen.

Eine Vorrichtung zur Kommunikation besteht im wesentlichen aus einem Verteiler (1), der an eine Schnittstelle (2) einer Nebenstellenanlage (3) anschließbar ist. Die Schnittstelle (2) kann als eine standardisierte a/b-Schnittstelle ausgebildet sein. Die Nebenstellenanlage (3) weist Verbindungsleitungen (4) zu einem Kommunikationsnetz (5) auf. Über Kabelverbindungen (6) ist die Nebenstellenanlage (3) mit Nebenstellen (7) verbunden. Der Verteiler (1) kommuniziert über eine Antenne (8) mit Handapparaten (9) von schnurlosen Telefonen, deren Basisstationen (10) im Bereich des Verteilers (1) angeordnet sind. Die Antenne (8) kann im Bereich des Verteilers (1) angeordnet und im Bereich eines den Verteiler (1) umschließenden Gehäuses (11) befestigt sein. Es ist aber auch möglich, die Antenne (8) als externe Antenne auszubilden und über ein Koaxialkabel mit dem Verteiler (1) zu verbinden.

Jeder der Handapparate (9) ist von einer Ladestation (12) aufnehmbar, die als ein eigenständiges Gerät ausgebildet ist und über ein Anschlußkabel (13) an eine Energieversorgung (14) anschließbar ist. Insbesondere ist daran gedacht, als Energieversorgung (14) das standardmäßig vorhandene Wechselstromnetz zu verwenden. Mit Hilfe der Ladestation (12) ist es möglich, im Bereich des Handapparates (9) angeordnete Akkumulatoren aufzuladen, bzw. entladene Akkumulatoren gegen aufgeladene Akkumulatoren auszuwechseln. Ein die Ladestation (12) umschließendes Gehäuse (15) kann im wesentlichen baugleich zu einem üblichen Gehäuse einer Basisstation (10) eines schnurlosen Telefones ausgebildet sein.

Im Bereich des Verteilers (1) ist eine Versorgungseinheit (16) angeordnet, die an eine Energieversorgung (14) angeschlossen ist. Insbesondere ist auch hier daran gedacht, als Energieversorgung (14) das standardmäßig vorhandene Wechselstromnetz zu verwenden. Im Bereich von mit der Nebenstellenanlage (3) verbundenen Anschlüssen des Verteilers (1) sind Übertragungseinheiten (17) angeordnet, die eine Datenübertragung zwischen dem Verteiler (1) und der Nebenstellenanlage (3) koordinieren. Die Antenne (8) ist über ein Filter (18) an den Verteiler (1) angeschlossen. Zwischen den Basisstationen (10) und einer mit der Antenne (8) verbundenen Antennenweiche (19) ist ein eine galvanische Trennung der Basisstationen (10) von der Antennenweiche (19) vornehmender Koppler (20) angeordnet. Darüber hinaus werden die Basisstationen (10) von einer Endstufenabschaltung (21) beaufschlagt, die von der Versorgungseinheit (16) gespeist ist. Über einen Anschluß (22) ist die Endstufenabschaltung (21) unmittelbar mit der Antennenweiche (19) verbunden. Im Bereich der Antennenweiche (19) ist ein Empfangsverstärker sowie ein Sendeverstärker angeordnet. Darüber hinaus erfolgt durch die Antennenweiche (19) eine Entkopplung der Sendesignale.

Im Bereich eines Handapparates (9) ist ein Schalter angeordnet, um den Handapparat (9) vor Aufnahme einer Kommunikation einzuschalten und nach einem Abschluß der Kommunikation wieder abzuschalten. Hierdurch wird ein geringer Energieverbrauch und damit lange Austauschzyklen für die Akkumulatoren der Handapparate, gewährleistet. In einem ausgeschalteten Zustand wird vom Handapparat (9) lediglich eine Anwahl durch die zugeordnete Basisstation (10) angezeigt.

Zur Herstellung einer Kommunikationsverbindung auf Veranlassung eines Nebenstelleninhabers schaltet dieser den Handapparat (9) ein und übermittelt die Anwahl- und Sprachsignale zur zugeordneten Basisstation (10), die die Informationen über die Übertragungseinheiten (17) und die Schnittstelle (2) der Nebenstellenanlage (3) zuführt. In Abhängigkeit vom anzuwählenden Teilnehmer stellt die Nebenstellenanlage (3) eine Verbindung zu einem anderen Handapparat (9), einer Nebenstelle (7) oder eine Verbindung zum Kommunikationsnetz (5) her. Zur Weiterleitung eines ankommenden Gespräches an einen Handapparat (9) wird das aus dem Kommunikationsnetz (5), einer Nebenstelle (7) oder einem Handapparat (9) ankommende Gespräch von der Nebenstellenanlage (3) zum Verteiler (1) weitergeleitet, der eine entsprechende Basisstation (10) aktiviert, die die Signale zum zugeordneten Handapparat (9) weiterleitet.

Ein nichtbenutzer Handapparat (9) kann an einer beliebigen Stelle abgelegt werden. Insbesondere ist es aber auch möglich, den Handapparat (9) während längerer Benutzungsunterbrechungen im Bereich der Ladestation (12) zu haltern. Hierdurch ist stets ein ausreichender Ladezustand von im Bereich des Handapparates (9) angeordneten Akkumulatoren gewährleistet.

**Patentansprüche**

1. Vorrichtung zur Ausbildung von Nebenstellanlagen unter Einsatz von schnurlosen Telefonen, bestehend aus mindestens einer Basisstation einem Handapparat und einer Ladestation, dadurch gekennzeichnet, daß mehrere Basisstationen (10) von einer gemeinsamen Versorgungseinheit (16) gespeist und über einen eine galvanische Trennung vornehmenden Koppler (20) mit einer Antennenweiche (19) verbunden sind, die an eine über Funkstrecken (23) mit den Handapparaten (9) kommunizierende Antenne (8) angeschlossen sind und die Ladestationen (12) als von den Basisstationen (10) getrennt angeordnete eigenständige Einheiten ausgebildet sind.

2. Vorrichtung nach Anspruch 1, dadurch gekennzeichnet, daß die Antennenweiche (19), die Basisstationen (10) sowie die Basisstationen (10) mit der Nebenstellenanlage (3) verbindende Übertragungseinheiten (17) in einem gemeinsamen Gehäuse (11) angeordnet sind und einen Verteiler (1) ausbilden.

3. Vorrichtung nach Anspruch 1 oder 2, dadurch gekennzeichnet, daß im Bereich der Antennenweiche (19) ein Empfangsverstärker angeordnet ist.

4. Vorrichtung nach mindestens einem der Ansprüche 1 bis 3, dadurch gekennzeichnet, daß im Bereich der Antennenweiche (19) ein ein Sendesignal entkoppelnder Sendeverstärker angeordnet ist.

5. Vorrichtung nach mindestens einem der Ansprüche 1 bis 4, dadurch gekennzeichnet, daß die Antenne (8) im Bereich des Gehäuses (11) angeordnet ist.

6. Vorrichtung nach mindestens einem der Ansprüche 1 bis 4, dadurch gekennzeichnet, daß die Antenne (8) als separat vom Gehäuse (11) angeordnetes externes Bauteil ausgebildet ist.

7. Vorrichtung nach mindestens einem der Ansprüche 1 bis 6, dadurch gekennzeichnet, daß die Basisstationen (10) von einer Endstufenabschaltung (21) beaufschlagt sind.

8. Vorrichtung nach mindestens einem der Ansprüche 1 bis 7, dadurch gekennzeichnet, daß mindestens eine der Ladestationen (12) ein entsprechend einer Bauform eines Gehäuses einer Basisstation (10) ausgebildetes Gehäuse (15) aufweist.

9. Vorrichtung nach mindestens einem der Ansprüche 1 bis 8, dadurch gekennzeichnet, daß im Bereich des Handapparates (9) ein ihn aktivierender und deaktivierender Schalter angeordnet ist.

Fig. 1

Fig. 2